# EUROPEAN PATENT SPECIFICATION

(11) **EP 0 583 369 B1**
(45) Date of publication and mention of the grant of the patent: **21.08.1996**
(21) Application number: 92911793.5
(22) Date of filing: 15.04.1992
(51) Int. Cl.: C08L 9/06, B60C 1/00

(54) **TIRE TREAD COMPOSITIONS**
ZUSAMMENSETZUNGEN FÜR REIFENLAUFFLÄCHE
COMPOSITIONS POUR BANDE DE ROULEMENT

(30) Priority: 10.05.1991 US 698424
(43) Date of publication of application: 23.02.1994
(73) Proprietor: UNIROYAL CHEMICAL COMPANY, Inc., Middlebury Connecticut 06749 (US)
(72) Inventor: HONG, Sung, W., Cheshire, CT 06410 (US); MCKENZIE, Georges, T., Watertown, CT 06795 (US); WINGROVE, Donald, E., Leesburg, FL 34788 (US)
(74) Representative: Spott, Gottfried, Dr.
(86) International application number: US9203016
(87) International publication number: WO9220737

(56) References cited:
- DE-A- 1 570 113
- US-A- 2 397 050

## Description

### BACKGROUND OF THE INVENTION

### 1. Field of the Invention

This invention relates to tire tread compositions having high abrasion resistance, high traction and low rolling resistance.

The treads of modern tires must meet performance standards which require a broad range of desirable properties. Thus, rubber compositions suitable for tire treads should exhibit not only desirable strength and elongation, particularly at high temperatures, but also good cracking resistance, good abrasion resistance, desirable skid resistance and low tan delta values at low frequencies for desirable rolling resistance. Additionally, a high complex dynamic modulus is necessary for maneuverability and steering control.

Major tire manufacturers have developed tread compounds which provide lower rolling resistance for improved fuel economy and better skid/traction for a safer ride. Most passenger tread compounds contain either solution styrene butadiene rubber (S-SBR) or emulsion styrene butadiene rubber (E-SBR) blended with either high Cis polybutadiene (Cis BR) or high vinyl content polybutadiene (HV-BR). Three types of performance are important in tread compounds. They include good wear resistance, good traction and low rolling resistance. Therefore, it is important to select the appropriate SBR to develop a tire tread with good overall performance.

Compounds which provide good wet traction should have high tangent delta values at low temperatures (0°C), while compounds having low rolling resistance should have low tangent delta values at high temperatures (50-100°C). These two properties are very difficult to obtain from an E-SBR/Cis BR blended tire compound since wet skid/traction and low rolling resistance are contradictory to each other. For example, low glass transition high Cis polybutadiene rubber has very poor wet skid/traction, while it provided lower rolling resistance and good wear resistance. High styrene content E-SBR has a high glass transition temperature which results in high tangent delta at 0°C and 50-100°C respectively. It provides higher rolling resistance, good wet traction and fast wear.

It has been reported that wear is related with the styrene content of SBR in a tread compound. High styrene SBR is often used in high performance tread to improve skid/traction and provide a better handling and safer tire. This performance comes at the expense of rolling resistance and tread wear properties.

### 2. Description of related art

U.S. Patent 4,894,420 is directed to tire treads having cis 1,4-polyisoprene, at least one copolymer containing acrylonitrile rubber, and a rubber based on polybutadiene. U.S. Patent 4,791,178 refers to a tire tread composition of at least 30% of a conjugated diene-monovinyl aromatic hydrocarbon copolymer. U.S. Patent 4,866,131 refers to a rubber composition for use in tires containing a high styrene SBR. U.S. Patent 4,616,685 refers to tire treads containing a plasticizing ester, a styrene-butadiene rubber having more than 25% styrene by weight, and a second rubber ingredient chosen from butyl rubber, butyl halide rubber, butadiene/acrylonitrile copolymer, or mixtures thereof. U.S. Patent 4,433,094 refers to tire treads having a particular type of carbon black, styrene-butadiene rubber having a specific bound styrene content, and optionally another diene rubber. U.S. Patent 4,788,241 refers to a curing system comprised of a curative, a paraffin wax and pentaerythritol tetrastearate, which is said to cure rubbers such as natural rubber, cis-polyisoprene, polybutadiene, solution and emulsion poly(styrene-butadiene), EPDM, poly(acrylonitrile-butadiene), and mixtures thereof.

### SUMMARY OF THE INVENTION

It has now been found that the tire tread compositions of the present invention exhibit high abrasion resistance, high traction yet low rolling resistance. The rubber portion of the tire tread composition comprises:
i) a first rubber component comprising 5-15 parts of nitrile-butadiene rubber (NBR) per hundred parts of rubber (phr);
ii) a second rubber component comprising 43-95 phr of solution styrene butadiene rubber (S-SBR); and
iii) a third rubber component comprising 0-47 phr of high cis polybutadiene (cis BR) rubber.

The compositions may also include suitable amounts of other ingredients such as carbon black, aromatic oil, zinc oxide, stearic acid, sulfur, sulfur donor compounds, sulfur cure accelerators, waxes and antiozonants.

### DETAILED DESCRIPTION OF THE INVENTION

As summarized above, the rubber portion of the tire tread comprises either a two component mixture of SBR and NBR, or a three component mixture of SBR, cis BR and NBR, in the relative amounts previously stated. When the three component mixture is utilized, the relative amounts of S-SBR and cis BR should be such that the S-SBR component forms the continuous phase.

The rubber components of the present invention are all known and commercially available. A particularly suitable NBR material, having an acrylonitrile content of 38.5-40.9%, is sold under the name PARACRIL® CJLT (trademark of the Uniroyal Chemical Company), and referred to hereinafter as CJLT. Another suitable NBR material is known as PARACRIL® BJLT (trademark of the Uniroyal Chemical Company), and referred to hereinafter as BJLT. This material has an acrylonitrile content of 31.4-33.8%. Although both PARACRIL® nitrile rubbers were used in the compounding and there are examples included herein for both, the higher acrylonitrile content of CJLT is more effective at a lower level.

In theory any solution SBR may be used in the present invention. Preferred is an SBR having a low bound styrene content, for example not more than about 24%, since the use of NBR in the present invention allows use of lower bound styrene contents than generally used commercially. Particularly suitable is a solution SBR with a bound styrene content of about 18%, which is available commercially.

The curative system employed in the present invention for the rubber portion is any suitable system known in the art, and may include sulfur and/or a sulfur donor compound, and at least one sulfur cure accelerator.

If sulfur is used, it is preferably present in an amount of between about 1.0-3.0 parts per hundred parts of rubber.

The sulfur donor compounds which may be employed in conjunction with or in the alternative to sulfur are well known to those skilled in the art of rubber compounding. Illustrative of such sulfur donor compounds are 2-(4-morpholinyldithio)-benzothiazole, tetramethylthiuram disulfide, tetraethylthiuram disulfide, dipentamethylene thiuram hexasulfide and N,N'-caprolactam disulfide.

The sulfur cure accelerators which may be employed include thioureas, such as N,N'-dibutylthiourea, 2-mercaptoimidazoline and tetramethylthiourea ; guanidine derivatives, such as N'N'-diphenylguanidine ; xanthates, such as zinc dibutylxanthate ; dithiocarbamates, such as zinc dibutyldithio carbamate and sodium diethyldithiocarbamate ; thiuramsulfides, such as dipentamethylenethiuram disulfide, dipentamethylenethiuram hexasulfide, tetrabutylthiuram monosulfide, tetramethylthiuram monosulfide and tetraethylthiuram disulfide heterocyclics, such as mercaptobenzimidazole, mercaptobenzothiazole, 2,2-dibenzothiazoyl disulfide and zinc 2-mercaptobenzothiazole ; and sulfenamides, such as N-oxydiethylene-2-benzothiazolesulfenamide, n-t-butylbenzothiazolesulfenamide, N-cyclohexyl-2-benzothiazolesulfenamide and N,N'-diisopropyl-2-benzothiazylsulfenamide. Moreover, mixtures of two or more sulfur cure accelerators may be employed in the curing agent of this invention. The preferred accelerators are thiazoles and sulfenamides, with sulfenamides being particularly preferred.

The sulfur cure accelerator is generally present in amounts of between about 0.1 part and about 5 parts per 100 parts of rubber, with preferably between about 0.3 part and about 3.0 parts of accelerator per 100 parts of rubber being present. Most preferably, between about 0.3 part and about 1.5 part of accelerator per 100 parts of rubber are employed.

In addition to the rubber components and the curing agents described above, the tire tread composition of this invention may further comprise zinc oxide, reinforcing agents, fillers, processing aids, extender oils, plasticizers and antidegradants, all of which additional components are well known to those skilled in the rubber art.

Preferably, between about 2 and about 10 parts of zinc oxide per hundred parts of rubber are employed, although amounts in excess of 10 parts may also be employed. Most preferably, between about 3 and about 5 parts of zinc oxide per 100 parts of rubber are present.

### EXAMPLES

The following Examples are intended to further illustrate the invention and are not intended to limit the scope of the invention in any manner.

### Examples 1-6 and Comparative Experiment A

Employing the ingredients indicated in Tables I-II (which are listed in parts per hundred of rubber by weight), several rubber compositions were compounded in the following manner: the polymers are added to an internal mixer, and after a breakdown of approximately one minute, the carbon black, activators, protectants and oils are added. The batch is mixed until the materials are incorporated and thoroughly dispersed and discharged from the mixer. Discharge temperatures of about 125-150°C are typical. The batch is cooled, and is reintroduced into the mixer along with the curatives. This second pass is shorter and discharge temperatures generally run between 110-120°C. The compounded stocks were then sheeted out and samples were cut for cure. The samples were cured for the times and at the temperatures indicated in Tables III and IV, and their physical properties evaluated. The results of such testing are summarized in Tables III and IV below. Note that in Tables III and IV, PICO abrasion was measured following procedures given in ASTM D-2228; Tensile Strength, Elongation, and Modulus were measured following procedures in ASTM D412. Also, tensile and modulus values in Table III are given in psi units, whereas in Table IV they are given in MPa units. It is known to one skilled in the art that 1 psi equals 0.006895 MPa. Further, the Tear Die C values in Table III are in pounds per inch (ppi), whereas in Table IV they are given in KN/m. It is known to one skilled in the art that 1 ppi equals 0.175 KN/m. Examples 1-4 illustrate the two component rubber compositions of the present invention. Examples 5-6 illustrate the three component rubber compositions of the present invention. Example A represents a control sample included for comparative purposes.

**TABLE I**

| Example | A | 1 | 2 |
|---|---|---|---|
| S-SBR (Shell Cariflex® 1210) (18% bound styrene) | 70.0 | 90.0 | 85.0 |
| HVBR* | 30.0 | --- | --- |
| NBR¹ | --- | 10.0 | 15.0 |
| Carbon Black (N-234) | 55.0 | 55.0 | 55.0 |
| Aromatic Oil (Sundex 790) | 20.0 | 20.0 | 20.0 |
| Zinc Oxide (Kadox 911C) | 3.0 | 3.0 | 3.0 |
| Stearic Acid | 1.0 | 1.0 | 1.0 |
| Antiozonant² | 1.0 | 1.0 | 1.0 |
| Sunproof Improved Wax | 0.5 | 0.5 | 0.5 |
| DPG (N,N¹-diphenylguanidine) | 0.4 | 0.4 | 0.4 |
| Accelerator³ | 0.5 | 0.5 | 0.5 |
| Delayed Action Accelerator4 | 1.0 | 1.0 | 1.0 |
| Tire Sulfur | 1.5 | 1.5 | 1.5 |

| | | | |
|---|---|---|---|
| REMARKS: * Duradene 712, trademark, Firestone Tire and Rubber Co, High Vinyl Polybutadiene | | | |
| (1) Uniroyal Chemical Co. Paracril® CJLT (38.5-40.9% ACN) | | | |
| (2) Uniroyal Chemical Co. Flexzone® 7F | | | |
| (3) Uniroyal Chemical Co. Naugex® SD-1 (4,4¹-Dithiodimorpholine) | | | |
| (4) Uniroyal Chemical Co. Delac NS (N-t-butyl-2-benzothiazole sulfenamide) | | | |

Examples 3 and 4 are similar to Examples 1 and 2 except that a different type of nitrile rubber is used in the compounding, namely Paracril® BJLT, which has an acrylonitrile content of 31.4-33.8%. Examples 5 and 6 are examples of the three component blends of the present invention.

**TABLE II**

| Example | 3 | 4 | 5 | 6 |
|---|---|---|---|---|
| S-SBR (Shell Cariflex® 1210) | 90.0 | 85.0 | 50.0 | 50.0 |
| cis BR** | --- | --- | 40.0 | 40.0 |
| NBR (CJLT) | --- | --- | --- | 10.0 |
| NBR (BJLT) | 10.0 | 15.0 | 10.0 | --- |
| Carbon Black (N-234) | 55.0 | 55.0 | 55.0 | 55.0 |
| Aromatic Oil (Sundex 790) | 20.0 | 20.0 | 20.0 | 20.0 |
| Zinc Oxide (Kadox 911C) | 3.0 | 3.0 | 3.0 | 3.0 |
| Stearic Acid | 1.0 | 1.0 | 1.0 | 1.0 |
| Antiozonant² | 1.0 | 1.0 | 1.0 | 1.0 |
| Sunproof Improved Wax | 0.5 | 0.5 | 0.5 | 0.5 |
| DPG (N,N¹-diphenylguanidine) | 0.4 | 0.4 | --- | --- |
| Accelerator³ | 0.5 | 0.5 | --- | --- |
| Delayed Action Accelerator⁴ | 1.0 | 1.0 | 1.1 | 1.1 |
| Tire Sulfur | 1.5 | 1.5 | 1.8 | 1.8 |

| | | | | |
|---|---|---|---|---|
| REMARKS: **PBD 1203 (American Synthetic Rubber Co.) 2-4 as in Table I above. | | | | |

### CURED PHYSICAL PROPERTIES

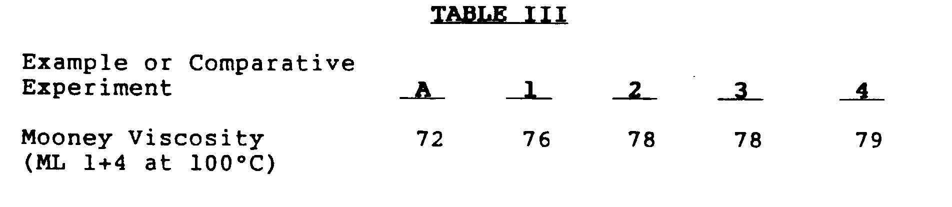

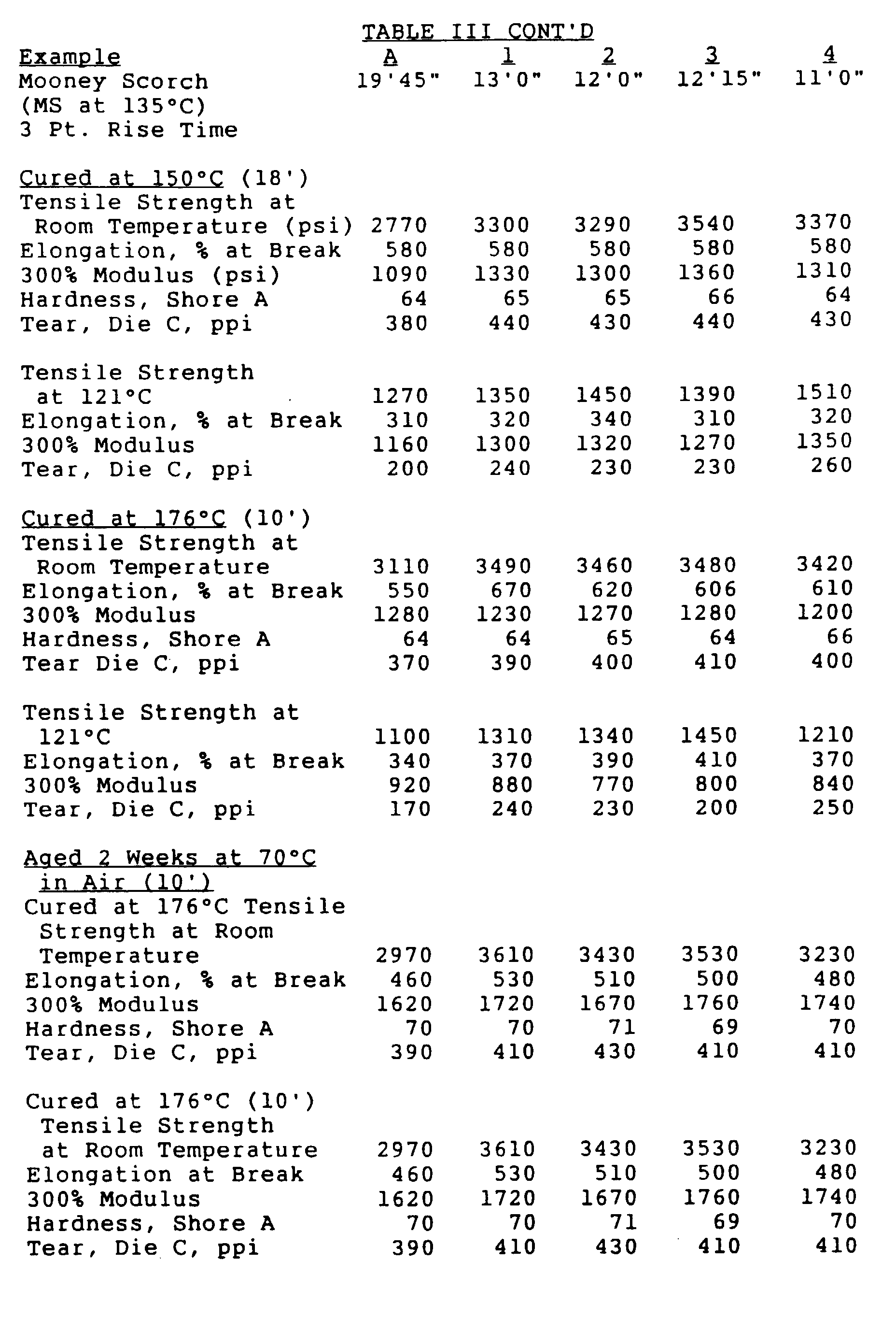

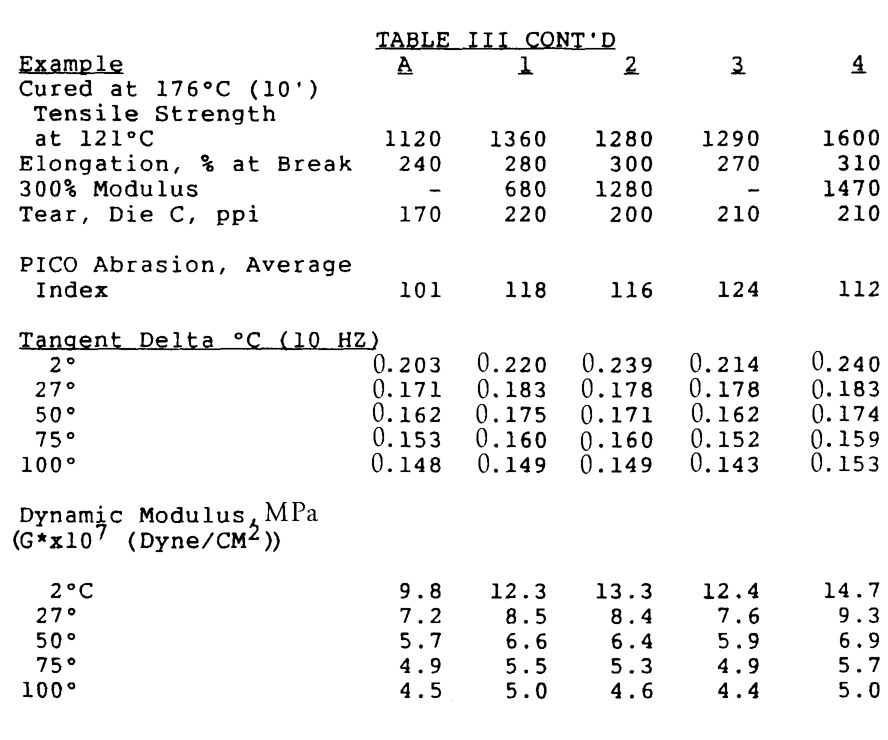

### CURED PHYSICAL PROPERTIES

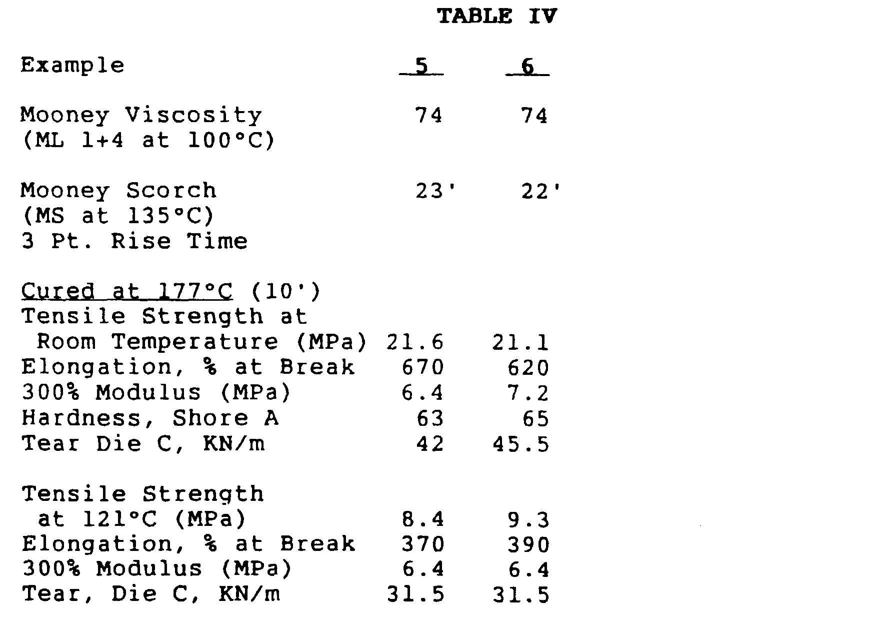

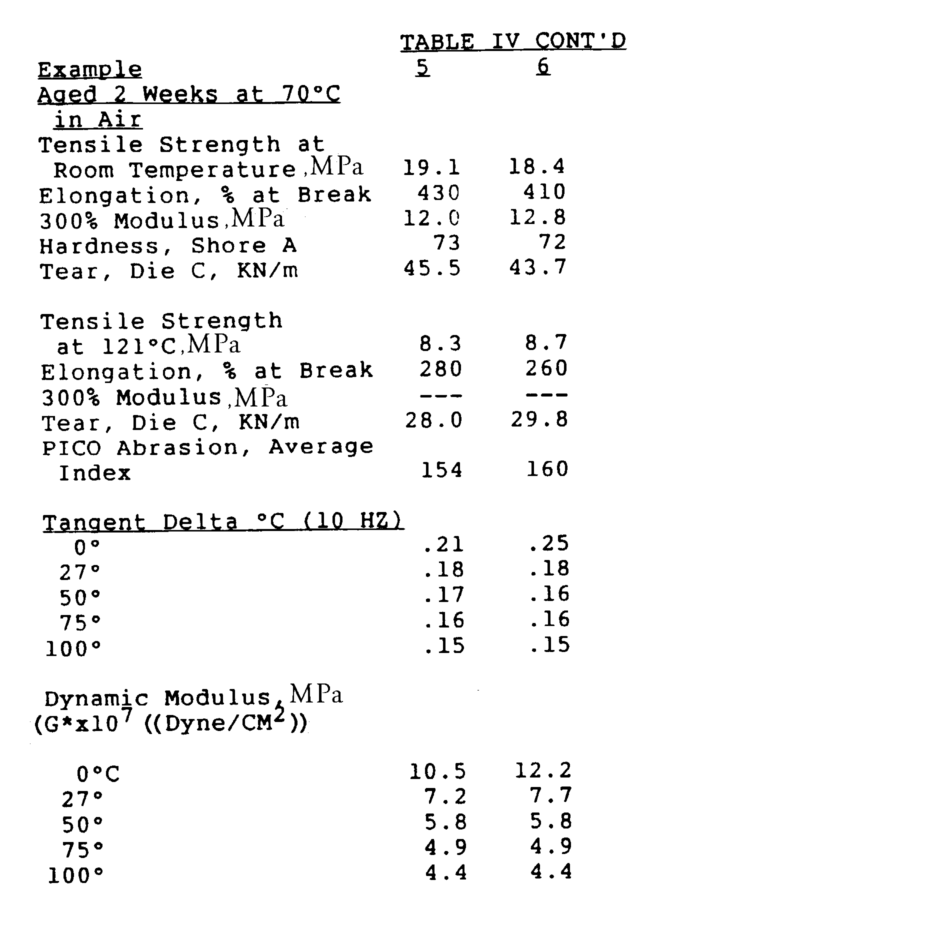

It can be seen from the above data that the examples containing the nitrile rubbers provide superior performance when compared to the standard S-SBR/HVBR (Example A). The dynamic modulus values for Examples 1-4 are either higher or nearly identical to those of example A at all temperatures tested. It is also noteworthy that the 100° tangent delta value rises above that of the control from Example 3 to 4 as a result of the NBR content being raised from 10 to 15 phr. This demonstrates the undesirability of NBR contents substantially above 15 phr. Also, as shown in Table III, The PICO Abrasion Index decreases with increasing NBR content.

It is further evidenced, in examing Pico abrasion Indicies, that all the nitrile-containing compounds have a higher average index than does the control example A. Still further evidence as to the superiority of the nitrile-containing examples is given in the physical properties, both aged and unaged.

The above data show a significant increase in elongation at break, hot tear strength, Shore A Hardness, hot tensile strength and composite dynamic modulus in the compositions employed in the tires of this invention. Higher elongation at break may contribute to solving tread tearing problems when cured tires are released from the mold. Shorter elongation tread compounds have tread tearing problems when releasing them from all season tire molds.

It is also concluded from these data that the samples containing the nitrile rubber with 38.5-40.9% ACN are the preferred embodiments of this invention, demonstrating optimal qualities desired in the cured rubber.

## Claims

1. A tire tread composition comprising
i) a first rubber component comprising about 5-15 parts of nitrile-butadiene rubber (NBR) per hundred parts of rubber (phr);
ii) a second rubber component comprising about 43-95 phr of solution styrene butadiene rubber (S-SBR); and
iii) a third rubber component comprising 0-47 phr of high cis polybutadiene (cis BR) rubber.

2. The composition of claim 1 further comprising a compound selected from the group consisting of sulfur, a sulfur donor compound, a sulfur cure accelerator, and combinations thereof.

3. The composition of claim 2 wherein the sulfur donor compound is selected from the group consisting of 2-(4-morpholinyldithio)-benzothiazole, tetramethylthiuram disulfide, tetraethylthiuram disulfide, dipentamethylene thiuram hexasulfide, and N,N'-caprolactam disulfide.

4. The composition of claim 2 wherein the sulfur cure accelerator is selected from the group consisting of thioureas, guanidine derivatives, xanthates, dithio carbamates, thiuram sulfides, heterocyclics, sulfenamides and mixtures thereof.

5. The composition of claim 1 further comprising additives selected from the group consisting of zinc oxide, reinforcing agents, fillers, processing aids, extender oils, plasticizers, antidegradents, and combinations thereof.

6. The composition of claim 1 wherein the NBR is present at 10 phr and the S-SBR is present at 90 phr.

7. The composition of claim 1 wherein the NBR is present at 10 phr, the S-SBR is present at 50 phr, and the cis BR is present at 40 phr.

8. A tire having a tread portion, said tread comprising a composition as claimed in claim 1.

9. A tire having a tread portion, said tread comprising a composition as claimed in claim 6.

10. A tire having a tread portion, said tread comprising a composition as claimed in claim 7.

## Patentansprüche

1. Reifenprofilzusammensetzung, umfassend
i) eine erste Kautschukkomponente umfassend etwa 5 bis 15 Teile Nitrilbutadienkautschuk (NBR) pro 100 Teile Kautschuk (phr);
ii) eine zweite Kautschukkomponente umfassend etwa 43 bis 95 phr Lösungsstyrolbutadienkautschuk (S-SBR) und
iii) eine dritte Kautschukkomponente umfassend 0 bis 47 phr Polybutadienkautschuk mit hohem cis-Anteil (cis-BR).

2. Zusammensetzung nach Anspruch 1, weiter umfassend eine Verbindung ausgewählt aus der Gruppe bestehend aus Schwefel, einer Schwefeldonorverbindung, einem Schwefelvulkanisationsbeschleuniger und Kombinationen davon.

3. Zusammensetzung nach Anspruch 2, worin die Schwefeldonorverbindung ausgewählt ist aus der Gruppe bestehend aus 2-(4-Morpholinyldithio)-benzothiazol, Tetramethylthiuramdisulfid, Tetraethylthiuramdisulfid, Dipentamethylenthiuramhexasulfid und N,N'-Caprolactamdisulfid.

4. Zusammensetzung nach Anspruch 2, worin der Schwefelvulkanisationsbeschleuniger ausgewählt ist aus der Gruppe bestehend aus Thioharnstoffen, Guanidinderivaten, Xanthaten, Dithiocarbamaten, Thiuramsulfiden, heterocyclischen Verbindungen, Sulfenamiden und Mischungen davon.

5. Zusammensetzung nach Anspruch 1, weiter umfassend Additive ausgewählt aus der Gruppe bestehend aus Zinkoxid, verstärkenden Mitteln, Füllstoffen, Verarbeitungshilfsstoffen, Extenderölen, Weichmachern, den Abbau hemmenden Mitteln und Kombinationen davon.

6. Zusammensetzung nach Anspruch 1, worin NBR in einem Anteil von 10 phr und S-SBR in einem Anteil von 90 phr vorhanden ist.

7. Zusammensetzung nach Anspruch 1, worin NBR in einem Anteil von 10 phr, S-SBR in einem Anteil von 50 phr und cis-BR in einem Anteil von 40 phr vorhanden ist.

8. Reifen mit einem Profilanteil, wobei das Profil eine Zusammensetzung nach Anspruch 1 umfaßt.

9. Reifen mit einem Profilanteil, wobei das Profil eine Zusammensetzung nach Anspruch 6 umfaßt.

10. Reifen mit einem Profilanteil, wobei das Profil eine Zusammensetzung nach Anspruch 7 umfaßt.

## Revendications

1. Composition de bandes de roulement de pneumatiques comprenant
i) un premier composant de caoutchouc comprenant environ 5 à 15 parties de caoutchouc nitrile-butadiène (NBR) pour cent parties de caoutchouc (phr);
ii) un second composant de caoutchouc comprenant environ 43 à 95 phr de caoutchouc butadiène styrène en solution (S-SBR); et
iii) un troisième composant de caoutchouc comprenant 0 à 47 phr de caoutchouc cis polybutadiène élevé (cis BR).

2. Composition selon la revendication 1 comprenant de plus un composé choisi dans le groupe consistant du soufre, d'un composé donneur de soufre, d'un accélérateur de vulcanisation au soufre, et des combinaisons de ceux-ci.

3. Composition selon la revendication 2 dans laquelle le composé donneur de soufre est choisi dans le groupe consistant du 2-(4-morpholinyldithio)-benzothiazole, du disulfure de tétraméthylthiurame, du disulfure de tétraéthylthiurame, de l'hexasulfure de dipentaméthylène thiurame, et du disulfure de N,N'-caprolactame.

4. Composition selon la revendication 2 dans laquelle l'accélérateur de vulcanisation au soufre est choisi dans le groupe consistant de thiourées, des dérivés de guanidine, de xanthates, des dithio carbamates, des sulfures de thiurame, des hétérocycliques, des sulfénamides et des mélanges de ceux-ci.

5. Composition selon la revendication 1 comprenant de plus des additifs choisis dans le groupe consistant de l'oxyde de zinc, des agents de renforcement, des charges, des aides de traitement, des huiles d'extension, des plastifiants, des antidégradants, et des combinaisons de ceux-ci.

6. Composition selon la revendication 1 dans laquelle le NBR est présent à 10 phr et le S-SBR est présent à 90 phr.

7. Composition selon la revendication 1 dans laquelle le NBR est présent à 10 phr, S-SBR est présent à 50 phr, et le cis BR est présent à 40 phr.

8. Pneumatique ayant une portion de bande de roulement, ladite bande de roulement comprenant une composition selon la revendication 1.

9. Pneumatique ayant une portion de bande de roulement, ladite bande de roulement comprenant une composition selon la revendication 6.

10. Pneumatique ayant une portion de bande de roulement, ladite bande de roulement comprenant une composition selon la revendication 7.
